# EUROPEAN PATENT APPLICATION

(11) **EP 1 854 346 A1**
(43) Date of publication of application: **14.11.2007**
(21) Application number: 05817184.4
(22) Date of filing: 16.11.2005
(51) Int. Cl.: A01G 9/14, A01G 13/02, D03D 15/00, B60R 21/04, B32B 29/00

(54) **BIODEGRADABLE TEXTILE**

(30) Priority: 16.11.2004 ES 200402807; 27.04.2005 ES 200501018
(71) Applicant: Mimcord S.A., E-08560 Manlleu (ES)
(72) Inventor: VILAMALA I SALA, Jordi, E-08560 Manlleu (ES)
(74) Representative: Maldonado Jordan, Julia
(86) International application number: PCT/ES2005/000624
(87) International publication number: WO 2006/053926

(57) **Abstract**

The invention relates to a biodegradable flexible textile comprising long elements, such as yarns, staples or narrow fabrics, which are interlaced or crossed with one another and which are obtained from fibres of paper or a non-woven cellulose fabric, preferably originating from conifers. The textile can comprise treatments in order to increase cosmic radiation filtering properties and treatments with fire-retardant, water-repellent, fungicidal, bactericidal or dying substances. The invention also relates to the use of said textile in order to cover the internal surfaces of vehicles and aircraft or as a cover for glasshouses, tents and similar.

## Description

This present invention refers to a biodegradable fabric and its use a covering for the internal surfaces of vehicles and for the covering of greenhouses, big tents for public events and similar items.

### BACKGROUND TO THE INVENTION

Greenhouses, big tents for public events and other similar constructions in general have a metal structure for the support of a sheet covering made from, in the case of greenhouses, a sheet of plastic, generally transparent, and in the case of big tents for public events or similar items, from a plastic awning or a plastic canvas.

The use of these continuous covers prevents adequate ventilation, which is a disadvantage for plants in the case of greenhouses and for the workers who have to work inside of these constructions.

On the other hand, the plastic sheets or layers used in these types of continuous sheet coverings suffer from a significant problem when they deteriorate and it is necessary to proceed with their replacement and elimination, as it either falls to specialised companies capable of converting the plastic into chemical waste, which carries with it additional costs, or alternatively they are dumped in uncontrolled tips, which means a problem as the plastic is a non-biodegradable material.

The limited transpiration provided by the fabrics normally used in these coverings, and the difficulty of their elimination once they have deteriorated are problems that also occur in other fields related to coverings or linings by means of sheet element, such as in linings for the internal surfaces of vehicles.

The differing internal surfaces of vehicles, both terrestrial and equally aeronautical are covered with different materials, the normal being the use of carpet for the covering of the floors and walls and the use of other textile fibre fabrics for the covering of other surfaces such as the seats.

The textile fibre fabrics, especially those used for the covering of seats, have a reduced transpiration, which brings about greater perspiration for the user and the build up of dampness in the covering and in the atmosphere; in addition the build up of dirt between the fibres that make up same create an ideal habitat for the accumulation and proliferation of mites.

This build up of dirt and the proliferation of mites means, especially in the case of aircraft, that said surface coverings must be changed with a higher frequency: this brings about the elimination and treatment problems mentioned above in regard to the covers of greenhouses, in addition to a high cost of maintenance, both in the time used in said operation, during which the vehicle is not operational, and equally because of the costs of the material and the installation.

These coverings in addition present other disadvantages, amongst which the combustible nature of said materials and an almost nil filtering of cosmic radiation must be highlighted, which is an especially important problem in the cabins of aircraft.

It would be desirable to have a suitable fabric for these types of applications that are low in cost and at the same time which reduced the problems of transpiration and the elimination of the materials once their useful working life has come to an end.

### DESCRIPTION OF THE INVENTION

In accordance with this objective, a first aspect of the present invention makes reference to a flexible biodegradable fabric that comprises of at least a layer of long elements which are interlaced or crossed with one another, and characterised because the long elements have been obtained from paper fibres or a non-woven cellulose fabric.

This fabric, thanks to the materials used, has a low cost and has a low weight; it allows transpiration and has good cosmic radiation and infra-red filtering properties, which makes it an optimal covering for the internal surfaces of aircraft cabins. Likewise it absorbs and reduces the transfer of external noises.

In addition, thanks to its biodegradable characteristics the problems associated with the elimination once it has come to the end of its working life are drastically reduced.

In effect, the fabric can be completely recycled; therefore, the fabric can be eliminated easily once it has deteriorated, or equally after its use; this can be especially useful in the case of greenhouses, terraces for summer use, marquees used for fairs or any other similar construction.

And as a result of the high degradability of its components, it can even be recycled for compost. For example, in the case of greenhouses, when the fabric has deteriorated from use it can be directly mixed with the earth to break it down into humus, or with weeds and stubble for conversion into by-products for compost.

Another property of the fabric is that because of being made up of paper elements it has a low susceptibility to staining and the stains which occur are dispersed quickly.

In another aspect, the invention refers to the use of a fabric as that described as a covering for the internal surfaces of vehicles or aircraft.

In a subsequent aspect, the invention makes reference to the use of a fabric such as that described, for the covering of greenhouses, big tents for public events or similar structures.

The invention likewise refers to a covering that has a low cost, is recyclable and biodegradable, with radiation reducing properties for the inner surfaces of vehicles, said surfaces being able to be walls, floors, ceilings, seats or others that are similar, both on terrestrial vehicles and equally aircraft. It is characterised because it has a sheet body made up of at least, a layer with fire retardant threads and/or strips of paper.

The invention likewise refers to a sheet element for the covering of greenhouses, big tents for public events and similar items, is characterised because it is made up from a flexible mesh made from a plurality of long paper or cellulose elements, that are completely biodegradable and appropriately interlaced or crossed, forming a plurality of openings between them.

### A BRIEF DESCRIPTION OF THE DRAWINGS

In order to complement the description that is being made and for the purpose of giving a greater understanding of the nature of the invention, a set of descriptive drawings is attached to this present descriptive memorandum that is by way of illustration and without being by way of limitation and which represents a practical case for an embodiment of the invention.

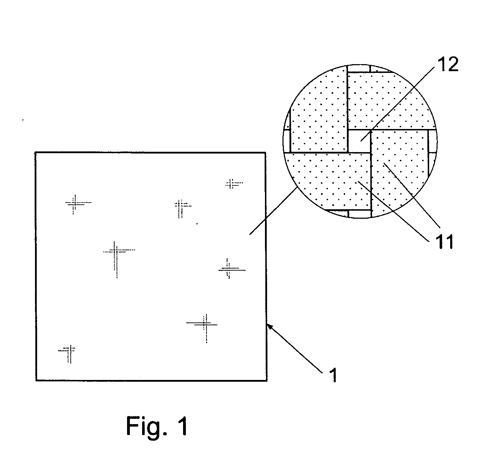

In said drawings, Figure 1 shows a view of the fabric according to an embodiment of the invention, with an expanded section of same.

### A DESCRIPTION OF PREFERRED EMBODIMENTS

Figure 1 shows a fabric 1 according to an example of an embodiment of the invention, which, as can be seen in the expanded section, is made up of long elements 11, interlaced or crossed, that between them define a plurality of openings 12.

The fabric can be made from any long element, for example, from yarns, staples or narrow fabric; an example has been shown in Figure 1, that is particularly suitable for the covering of greenhouses or big tents for public events, made with strips 11.

The long elements are in turn obtained from long cellulose fibres. The cellulose pulp is obtained from conifer trees, with a kraft process in which the woodchips are subjected to heating in a bath of sulphites and caustic soda, for the purpose of extracting the lignin.

This process allows very resistant threads to be obtained, both dry and damp; this high resistance when damp allows the incorporation of additives such as, colourings.

With yarns, staples, strips or a combination of same the fabric can be woven, which will have the appropriate dimensions and thicknesses for each case in which the application is required. For example, some yarns that are suitable for a fabric according to the invention can be around 10.3 Nm (metres per gram). The fabric can be made by any known fabric technique (weaving, knitting/knitwear, "rachel" methods,...).

Below by way of example are some of the characteristics of the fabric that would be particularly suitable for the internal covering of floors, walls, ceilings, seats and other surfaces in aircraft and vehicles in general:
Fabric: Bativa twill 3e1 b2.2
Warp density: 12.2 threads / cm
Weft density: 10.2 rows / cm
Thread thickness: 0.84 mm
Weight: 210 gr/m²
A fabric of this type has a resistance to traction of 37.0 daN (warp) and 34.1 daN (weft), excellent resistance properties to abrasion, likewise cosmic radiation filtering: for example, alpha and beta particle absorption of around 25% (DW) and gamma radiation of around 23% (DW).

This fabric can be applied to surfaces to be covered by conventional adhesive or sewing techniques or any others.

In the case of a fabric to cover greenhouses, such as that shown in Figure 1, the intermediary openings 12 can have, for example, a width of between 0.3 and 0.4 mm, whilst the strips 11 have double width, preferably between 0.6 and 0.8 mm.

These embodiments, and any other in which the openings have less width than the elongated elements, are designed to allow correct transpiration through the fabric and at the same time achieve a projection of shadows of some elements onto others and to filter the solar rays, however allowing the passage of light through the covering.

When the fabric is used to cover a glasshouse, tent or similar structure, and in spite of the fact that the fabric itself is suitable to make up a covering element in itself, it is also possible to place the fabric below a sheet of plastic, especially when it is used in areas with a high level of rainfall, in this case the fabric acting as a solar filter and reducer of sunshine on the plants, thanks to its solar radiation and ultra-violet ray filtering capacity.

It has been designed so that the fabric or the long elements with which the fabric is made can be subjected to a treatment with natural waxes in order to make handling easier, a treatment with surface treatment products, also by preference biodegradable, for resistance to dampness, or a fungicidal and bactericide treatment.

It has also been designed so that the fabric can be treated with a fire retardant product, preventing the elements making up the fabric from becoming combustible in the event of a fire, and/or with water repellent products.

Thus a fabric can be obtained that can transpire with fire-retardant, anti-static and isothermal properties, etc. and that makes the development of mites and other miniscule sized arachnids difficult, in such a way that it is particularly suitable for the finishing of vehicle interiors. The isothermal nature brings comfort at the same time as reducing the energy consumption of the vehicle.

The yarns, strips, or the already made up fabric can also be covered with waxes or resins to prevent accelerated deterioration, and it can be treated with pigments or colourings to give it a beauty integrated into its surroundings and suitable for different applications.

In the case of fabrics used as coverings on the inside of aircraft and other vehicles it can be particularly important to subject the fabric or its components to a treatment to increase the cosmic radiation filtering properties; it has been found that this resistance can be improved for example by means of the depositing of soluble salts onto the paper.

Experts in the subject will be able to introduce variations and modifications to the fabric described according to the specific requirements for each case, and replace any element for another that is technically equivalent, without this meaning the abandoning of the scope of the protection defined by the attached claims.

## Claims

1. A flexible biodegradable fabric that comprises of at least a layer of long elements (11) which are interlaced or crossed with one another, and **characterised** because the long elements (11) have been obtained from paper fibres or a non-woven cellulose fabric.

2. A fabric according to Claim 1, **characterised in that** said long elements (11) are yarns, staples or strips.

3. A fabric according to any of the previous claims, **characterised in that** the paper fibres or cellulose fabric has been obtained from wood from conifers by means of the kraft process.

4. A fabric according to any of the previous claims, **characterised in that** it is subjected to a treatment to increase the cosmic radiation filtering properties, preferably by means of the depositing of soluble salts.

5. A fabric according to any of the previous claims, **characterised in that** it is subjected to a treatment with fire retardant products.

6. A fabric according to any of the previous claims, **characterised in that** it is subjected to a water repellent treatment.

7. A fabric according to any of the previous claims, **characterised in that** it is subjected to a treatment with fungicides and bactericides.

8. A fabric according to any of the previous claims, **characterised in that** it is subjected to a treatment with pigments or colourings.

9. The use of a fabric according to any of the Claims 1 to 8 as a covering for the internal surfaces of vehicles or aircraft.

10. The use of a fabric according to any of the Claims 1 to 8 as a covering for greenhouses, big tents for public events or similar structures.

11. A covering that has a low weight, is recyclable and biodegradable with radiation reducing properties for the inner surfaces of vehicles, being able to be used on walls, floors, ceilings, seats or other similar surfaces, both in terrestrial vehicles and equally for aircraft, **characterised in that** it has a laminar body comprising of at least a layer of fire retardant thread and/or paper strip (11).

12. A laminar element for the covering of greenhouses, big tents for public events and similar structures, **characterised in that** it includes a flexible mesh comprising of a plurality of long elements (11) of paper or cellulose, which are completely biodegradable and suitably interlaced or crossed, thus defining a plurality of intermediary openings between one and another (12).
